# EUROPEAN PATENT APPLICATION

(11) **EP 2 151 415 A1**
(43) Date of publication of application: **10.02.2010**
(21) Application number: 08751888.2
(22) Date of filing: 21.04.2008
(51) Int. Cl.: C01B 31/02

(54) **CARBON NANOTUBE SOLUBILIZER**

(30) Priority: 09.05.2007 JP 2007124260
(71) Applicant: Kyushu University, National University Corporation, Higashi-ku Fukuoka-shi Fukuoka 812-8581 (JP); Nissan Chemical Industries, Ltd., Tokyo 101-0054 (JP)
(72) Inventor: NAKASHIMA, Naotoshi, Fukuoka-shi Fukuoka 819-0395 (JP); HIDA, Masahiro, Funabashi-shi Chiba 274-8507 (JP); TANAKA, Akihiro, Funabashi-shi Chiba 274-8507 (JP); ODOI, Keisuke, Tokyo 101-0054 (JP)
(74) Representative: Stoner, Gerard Patrick
(86) International application number: PCT/JP2008/057670
(87) International publication number: WO 2008/139839

(57) **Abstract**

A hyperbranched polymer containing, for example, a triarylamine structure represented by the formulae (10) to (13) below as a repeating unit, and having a weight average molecular weight of 750 to 4,000,000 is excellent in dissolving ability to carbon nanotubes. Consequently, by using such a hyperbranched polymer as a solubilizer, there can be obtained a composition wherein isolated carbon nanotubes are dissolved.

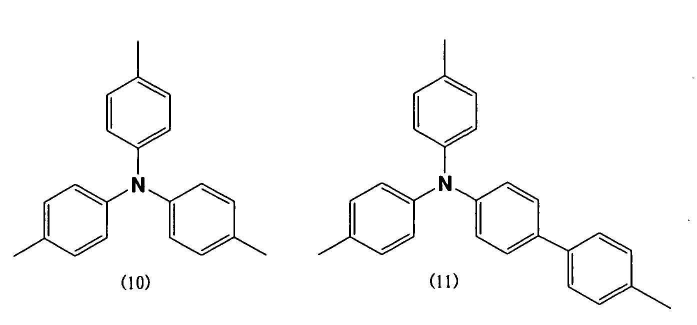

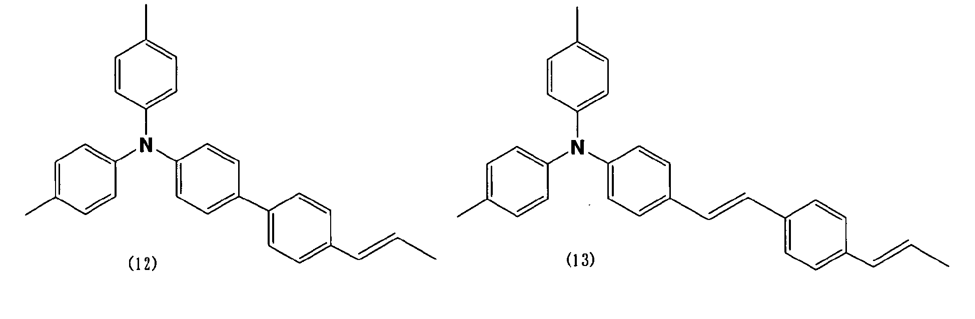

## Description

### TECHNICAL FIELD

The present invention relates to a carbon nanotube solubilizer, and more particularly to a carbon nanotube solubilizer including a hyperbranched polymer containing a triarylamine structure as a repeating unit.

### BACKGROUND ART

Carbon nanotubes (which may hereinafter be abbreviated to CNTs) have been investigated from the viewpoint of their possibility of being applied as a useful material for nanotechnology in a wide range of fields.
Their use is largely classified into the method of using a singular CNT itself, such as transistors and microscopic probes, and the method of using a multiplicity of CNTs collectively as bulk, such as electron emissive electrodes and fuel-cell electrodes or electroconductive composites in which CNTs are dispersed.

In the case of using the singular CNT, for example, a method is used in which CNTs are added to a solvent, the resulting admixture is irradiated with ultrasonic, and then only singularly dispersed CNTs are taken out by electrophoresis or the like.
On the other hand, in the case of the electroconductive composite to be used in bulk form, CNTs have to be well dispersed in, for example, a polymer used as a matrix material.
However, carbon nanotubes are generally difficult to disperse, and a composite obtained by use of an ordinary dispersing means is in a state in which the CNTs are dispersed incompletely. In view of this, investigations are being made for enhancing the dispersibility of CNTs by various methods such as surface reforming and surface chemical modification of CNTs.

Examples of the technique of reforming the surfaces of CNTs include a method in which the CNTs are added to an aqueous solution containing a surfactant such as sodium dodecylsulfonate (see Patent Document 1: JP-A H6-228824).
In this technique, however, adhesion of a nonconductive organic matter to the CNT surfaces occurs, thereby impairing the electroconductivity of the CNTs.
Besides, a method in which a polymer having a coiled structure is adhered to the CNT surfaces is also known. Specifically, a method has been proposed in which CNTs are added to a solvent containing poly[(m-phenylenevinylene)-co-(dioctoxy-p-phenylenevinylene)], and a precipitated CNT composite is separated and purified (Patent Document 2: JP-A 2000-44216). However, this polymer has an imperfect conjugated system, so that in this case, also, the electroconductivity of the CNT is impaired.

Furthermore, a technique of enhancing the dispersibility of single-walled CNTs by subjecting the CNTs to chemical modification by addition of a functional group or the like is also known (see Non-patent Document 1: Science, vol. 282, 1998).
In this technique, however, the chemical modification is likely to break the π-conjugated system constituting the CNT, thereby impairing the inherent characteristics of the CNT.
Thus, in the cases where the CNT surfaces are reformed, the dispersibility of the CNTs is more or less improved but another problem is brought about in that a characteristic inherent to the CNTs such as high electroconductivity is impaired.

Besides, by the above-mentioned methods, it is possible to downsize CNT lumps on the order of several millimeters to masses on the order of several micrometers, it is impossible to dissolve (disperse) the CNT material down to the size of singular CNTs (0.8 to 100 nm in diameter), i.e., to dissolve the CNTs into isolated state.
In connection with this point, Patent Document 2 shows the manner in which a polymer is adhering to the periphery of a single CNT. According to the technique of the document, however, the CNTs are once dispersed to a certain extent before being flocculated and precipitated to be collected, so that the CNTs cannot be preserved in an isolatedly dissolved state for a long period of time.

On the other hand, it is reported in Patent Document 3 that by using a conjugated polymer as a solubilizer (dispersant), CNT surfaces are covered with the conjugated polymer, resulting in that the CNTs are dispersed uniformly in a resin and, therefore, the electroconductivity inherent to the CNTs is exhibited. In this technology, the conjugated polymer used as a dispersant has a well-developed conjugated structure, which is advantageous in the case of utilizing electroconductivity or semiconductor characteristics.
In Patent Document 3, however, straight-chain polymers as conjugated polymer are only disclosed and no finding as to hyperbranched polymers is made clear.

Patent Document 1: JP-A H6-228824
Patent Document 2: JP-A 2000-44216
Patent Document 3: JP-A 2003-292801
Non-patent Document 1: Science, vol. 282, 1998

### DISCLOSURE OF THE INVENTION

### PROBLEMS TO BE SOLVED BY THE INVENTION

The present invention has been made in consideration of the above-mentioned circumstances. Accordingly, it is an object of the invention to provide a carbon nanotube solubilizer by which carbon nanotubes can be isolatedly dissolved to singular size thereof in a medium such as an organic solvent.

### MEANS FOR SOLVING THE PROBLEM

The present inventors earnestly made investigations for attaining the above object and, as a result of the investigations, found out that a hyperbranched polymer containing a triarylamine structure as a repeating unit is excellent in dissolving ability (dispersing ability) to carbon nanotubes and that by using the hyperbranched polymer as a carbon nanotube solubilizer, the carbon nanotubes (at least part of them) can be isolatedly dissolved to singular size thereof. Based on the findings, the present invention has been completed.
Incidentally, the expression "isolatedly dissolved" used herein means the condition in which individual ones of carbon nanotubes are independently dispersed in a medium without being aggregated into a lump-, bundle- or rope-like form by mutual cohesive force thereof. In other words, that carbon nanotubes are "solubilized" means that at least part of the carbon nanotubes in the system are in the above-mentioned "isolatedly dissolved" state.

Specifically, according to the present invention, there are provided:
1. A carbon nanotube solubilizer including a hyperbranched polymer containing a triarylamine structure as a repeating unit and having a weight average molecular weight of 750 to 4,000,000;
2. The carbon nanotube solubilizer of 1, wherein the triarylamine structure is represented by the formula (1): 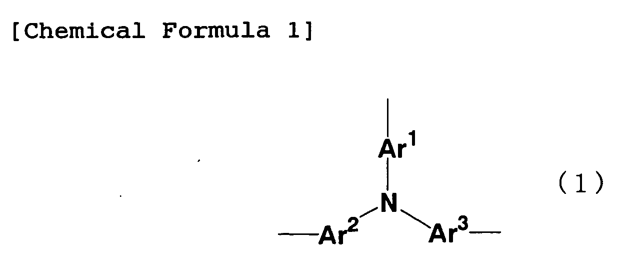 where Ar¹ Ar² and Ar³ are each independently a bivalent organic group selected from among the formulae (2) to (9): 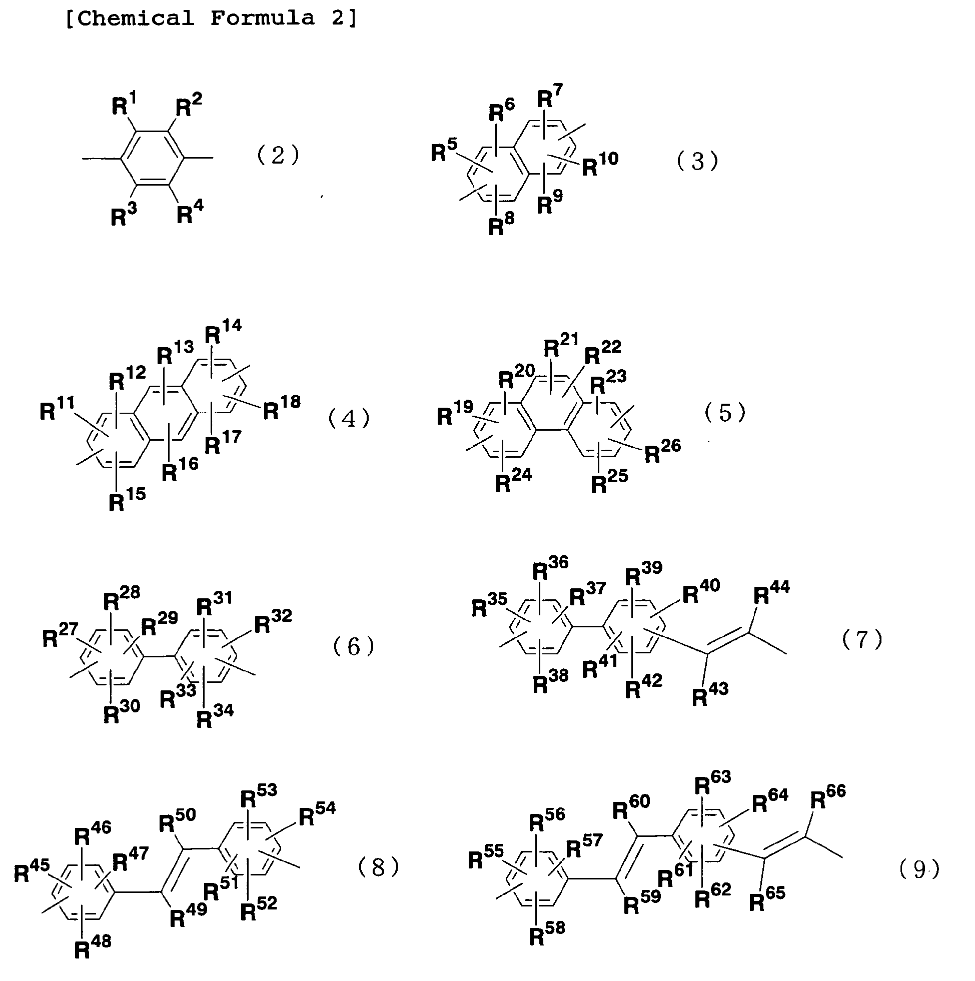 where R¹ to R⁶⁶ are each independently a hydrogen atom, a halogen atom, an alkyl group of 1 to 5 carbon atoms which may have a branched structure, or an alkoxyl group of 1 to 5 carbon atoms which may have a branched structure;
3. The carbon nanotube solubilizer of 2, wherein Ar¹, Ar² and Ar³ are each independently a bivalent organic group selected from among the above-mentioned formulae (2) to (6);
4. The carbon nanotube solubilizer of 2, wherein the triarylamine structure is represented by the formula (10): 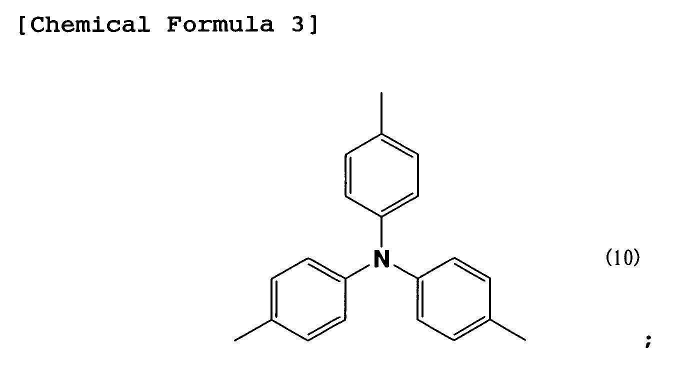
5. The carbon nanotube solubilizer of 2, wherein the triarylamine structure is represented by the formula (11): 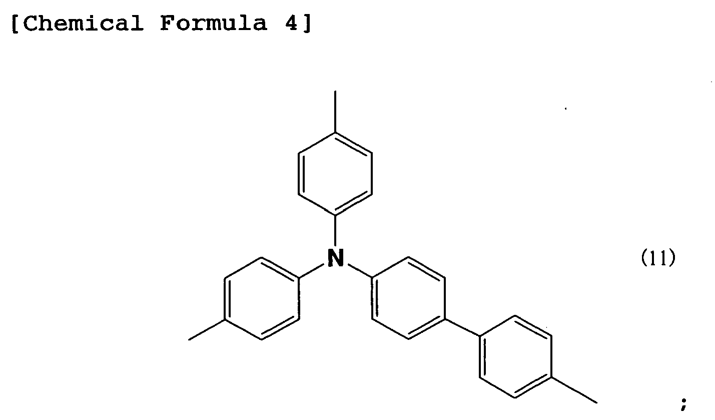
6. The carbon nanotube solubilizer of 2, wherein the triarylamine structure is represented by the formula (12): 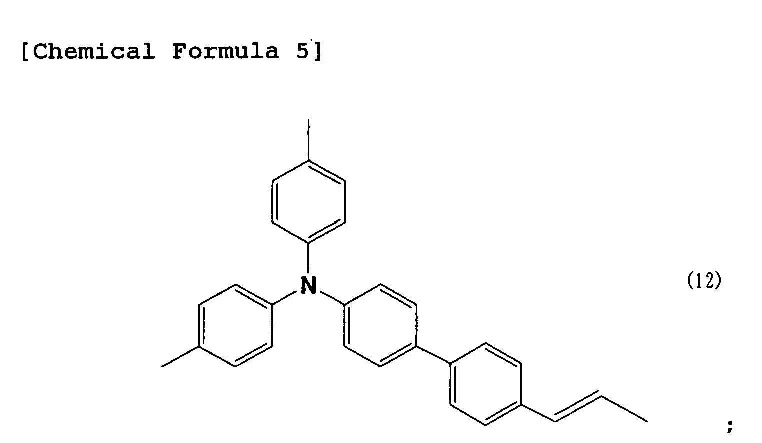
7. The carbon nanotube solubilizer of 2, wherein the triarylamine structure is represented by the formula (13): 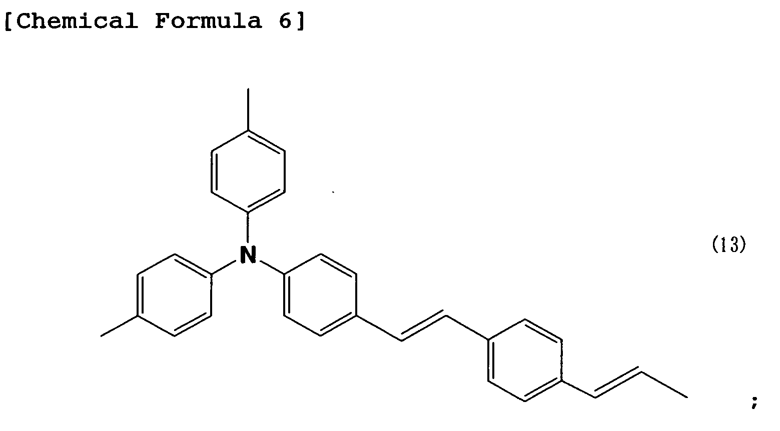
8. A composition containing a carbon nanotube solubilizer of any of 1 to 7, and carbon nanotubes;
9. The composition of 8, wherein the carbon nanotube solubilizer is adhered to surfaces of the carbon nanotubes to form a composite;
10. The composition of 8 or 9, further containing an organic solvent;
11. The composition of 10, wherein the carbon nanotubes are dissolved in the organic solvent;
12. The composition of 10, wherein the composite is dissolved in the organic solvent;
13. The composition of any of 8 to 12, wherein the carbon nanotube is at least one selected from the group composed of a single-walled carbon nanotube, a double-walled carbon nanotube and a multi-walled carbon nanotube;
14. A thin film obtained from a composition of any of 8 to 13;
15. A method of preparing a composition, including the steps of mixing a carbon nanotube solubilizer of any of 1 to 7, carbon nanotubes, and an organic solvent to prepare a mixture, and subjecting the mixture to ultrasonication;
16. The method of preparing the composition of 15, including the steps of adding carbon nanotubes to a solution containing the carbon nanotube solubilizer dissolved in the organic solvent to prepare the mixture, and subjecting the mixture to ultrasonication; and
17. The method of preparing the composition of 15 or 16, wherein the mixture is subjected to a heat treatment and thereafter to the ultrasonication.

### EFFECT OF THE INVENTION

Since the carbon nanotube solubilizer according to the present invention includes a hyperbranched polymer containing a triarylamine structure, the solubilizer is excellent in dissolving (dispersing) ability to carbon nanotubes and permits the carbon nanotubes to be isolatedly dispersed to singular size thereof.
By use of the solubilizer according to the present invention, therefore, it is possible to easily obtain a carbon nanotube-containing composition in which carbon nanotubes (at least part of them) are dispersed in an isolatedly dissolved state.
The composition is easy to control the amount of carbon nanotubes therein and, therefore, can be favorably used as a semiconductor material, a conductor material or the like.

### BRIEF DESCRIPTION OF DRAWINGS

FIG. 1 illustrates a chiral vector of carbon nanotube.
FIG. 2 is a diagram showing an ultraviolet-visible-near-infrared absorption spectrum of an SWCNT-containing solution obtained in Example 1.
FIG. 3 shows a near-infrared fluorescence spectrum of the SWCNT-containing solution obtained in Example 1.
FIG. 4 is a diagram showing an ultraviolet-visible-near-infrared absorption spectrum of an SWCNT-containing solution obtained in Example 4. The lower graph shows the spectrum of a PTPA-Br/SWCNT/THF solution, and the upper graph shows the spectrum of a PTPA-Br/SWCNT/THF/NMP solution.

### BEST MODE FOR CARRYING OUT THE INVENTION

Now, the present invention will be described more in detail below.
The carbon nanotube solubilizer according to the present invention includes a hyperbranched polymer containing a triarylamine structure as a repeating unit and having a weight average molecular weight of 750 to 4,000,000.
The hyperbranched polymer containing a triarylamine structure as a repeating unit is excellent in stability and exhibits excellent hole transport properties. Therefore, the hyperbranched polymer is expected also to be applied as an organic EL. In addition, the hyperbranched polymer shows a conductivity value close to those of conductors when used with an appropriate dopant, for example, an anion such as perchlorate ion, iodide ion, bromide ion and sulfate ion. Accordingly, the hyperbranched polymer can be expected also to be utilized as an electroconductive polymer.

In the present invention, if the weight average molecular weight of the polymer is less than 750, the solubilizing ability to carbon nanotubes may be conspicuously lowered or the polymer may fail to exhibit the solubilizing ability. If the weight average molecular weight exceeds 4,000,000, the solubilizing treatment for carbon nanotubes may be extremely difficult to deal with. A hyperbranched polymer having a weight average molecular weight of 1,000 to 2,000,000 is more preferable.
Incidentally, the weight average molecular weight in the present invention is a measured value (in terms of polystyrene) by gel permeation chromatography.

The triarylamine structure is not particularly limited. In the present invention, preferred is a triarylamine structure represented by the following formula (1).

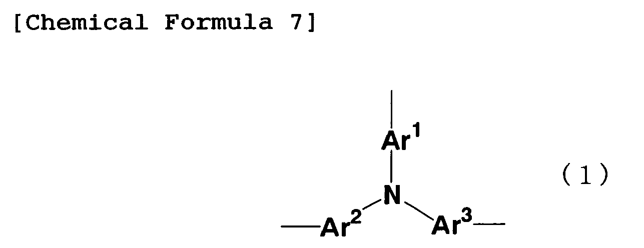

In the formula (1), Ar¹, Ar² and Ar³ are each independently a bivalent organic group selected from among the formulae (2) to (9).

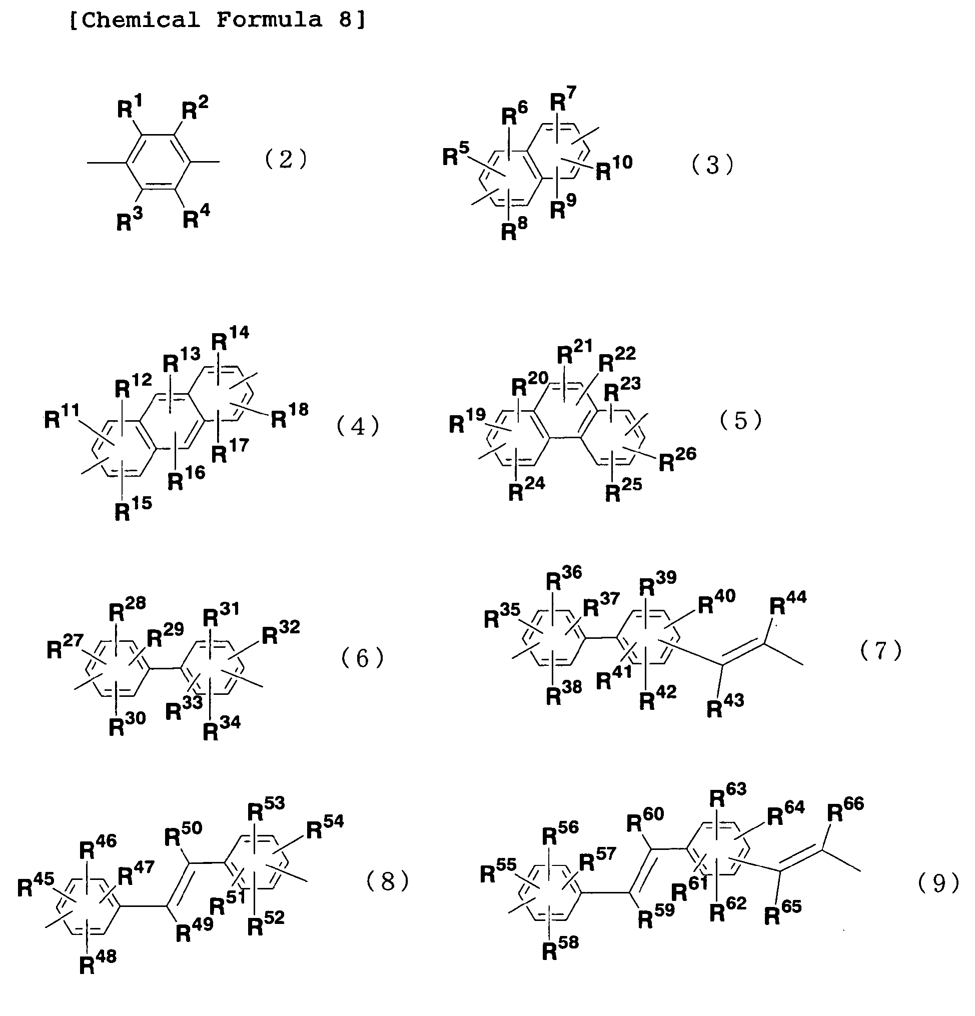

In the formulae (2) to (9), R¹ to R⁶⁶ are each independently a hydrogen atom, a halogen atom, an alkyl group of 1 to 5 carbon atoms which may have a branched structure, or an alkoxyl group of 1 to 5 carbon atoms which may have a branched structure.
Examples of the halogen atom include fluorine atom, chlorine atom, bromine atom, and iodine atom.
Examples of the alkyl group of 1 to 5 carbon atoms which may have a branched structure include methyl group, ethyl group, n-propyl group, i-propyl group, n-butyl group, s-butyl group, t-butyl group, and n-pentyl group.
Examples of the alkoxyl group of 1 to 5 carbon atoms which may have a branched structure include methoxyl group, ethoxyl group, n-propoxyl group, i-propoxyl group, n-butoxyl group, s-butoxyl group, t-butoxyl group, and n-pentoxyl group.

Among the bivalent organic groups represented by the above formulae (2) to (9), the bivalent organic groups represented by the formulae (2) to (6) are particularly preferable, since the polymers having only an aromatic group or groups in a structure thereof are excellent in dissolving (dispersing) ability to carbon nanotubes.
Specific examples of the triarylamine structure in the polymer used preferably in the present invention include, but are not limited to, those which are represented by the following formulae (10) to (13).

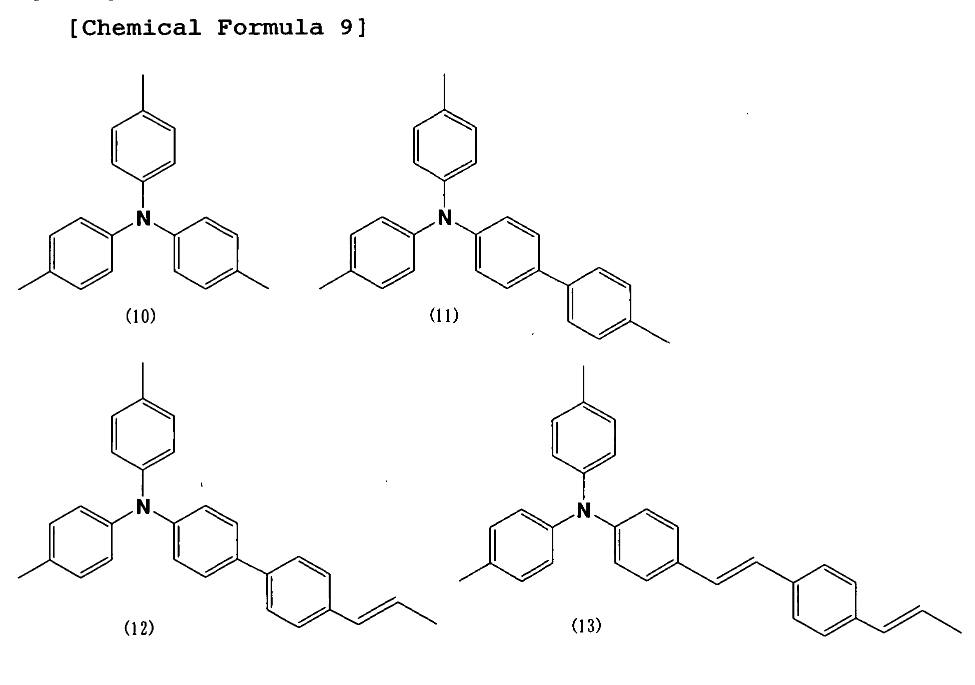

The carbon nanotube-containing composition according to the present invention contains the above-described carbon nanotube solubilizer and carbon nanotubes.
While carbon nanotubes (CNTs) are prepared by an arc discharge method, a chemical vapor deposition method (hereinafter referred to as CVD method), a laser ablation method or the like, the CNT used in the present invention may be a CNT obtained by any of the methods. Besides, the CNTs include single-walled CNT (hereinafter described as SWCNT) in which a single carbon film (graphene sheet) is rolled up into a cylindrical shape, double-walled CNT (hereinafter described as DWCNT) in which two graphene sheets are rolled up in a concentric form, and multi-walled CNT (hereinafter described as MWCNT) in which a plurality of graphene sheets are rolled up in a concentric form. In the present invention, SWCNT, DWCNT and MWCNT may be used either singly or in combination of two or more of them.

In preparation of SWCNT, DWCNT or MWCNT by the above-mentioned methods, fullerene or graphite or amorphous carbon may be produced as a by-product, and a catalyst metal such as nickel, iron, cobalt and yttrium may remain in the product, and, therefore, removal of such impurities and purification of the desired product may be needed. For removal of impurities, an acid treatment using nitric acid, sulfuric acid or the like and ultrasonication are effective. However, the acid treatment using nitric acid, sulfuric acid or the like would break a n-conjugated system constituting the CNT, whereby the inherent characteristics of the CNT may be spoiled. In such a situation, therefore, it is desirable to use the CNT product without purification.

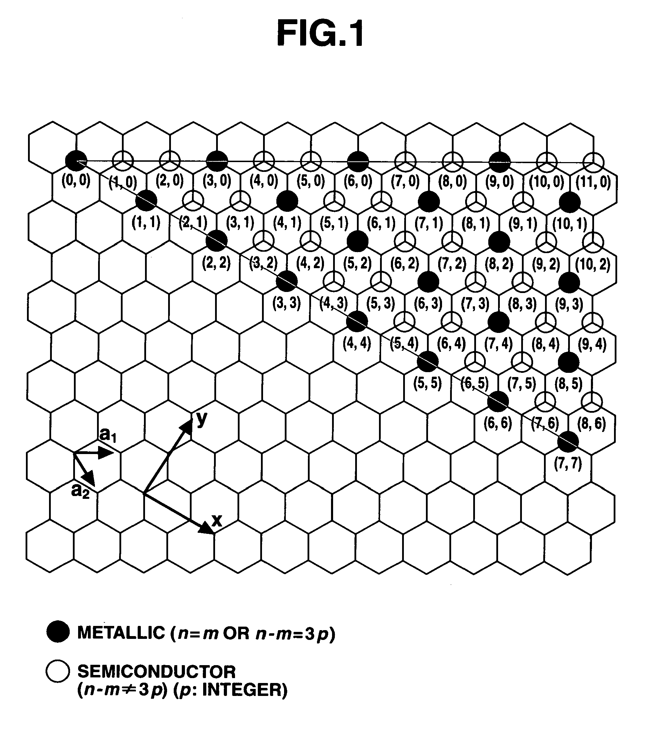

Electrical properties of a CNT vary from metallic properties to semiconductor-like properties, depending on the manner in which the graphene sheet is rolled up (chirality).
The chirality of a CNT is determined by a chiral vector shown in FIG. 1 (R = na₁+ma₂, where m and n are integers), and it is known that the CNT exhibits metallic properties in the case where n = m and in the case where n-m = 3p (where p is an integer) and that the CNT exhibits semiconductor-like properties in the other cases (n * m, n-m ≠ 3p). Therefore, particularly in using SWCNT, it is important for the CNT-containing composition to be so controlled that CNTs with a certain chirality are selectively solubilized (dispersed) therein.
By using the triarylamine hyperbranched polymer according to the present invention as a solubilizer (dispersant) for CNTs, a composition in which CNTs having a specified chirality are selectively dissolved may possibly be obtained.

The composition according to the present invention may further contain an organic solvent having a dissolving ability to the solubilizer (hyperbranched polymer).
Examples of such an organic solvent include: ether compounds such as tetrahydrofuran (THF) and diethyl ether; halogenated hydrocarbons such as methylene chloride and chloroform; amide compounds such as dimethylformamide and n-methylpyrrolidone (NMP); ketone compounds such as acetone, methyl ethyl ketone, methyl isobutyl ketone and cyclohexanone; alcohols such as methanol, ethanol, isopropanol and propanol; aliphatic hydrocarbons such as n-heptane, n-hexane and cyclohexane; and aromatic hydrocarbons such as benzene, toluene, xylene and ethylbenzene, among which preferred are THF, chloroform, NMP and cyclohexane. Incidentally, the above-mentioned organic solvents may be used either singly or in mixture of two or more of them.
Particularly, from the viewpoint of ability to enhance the proportion of the isolated CNTs dissolved, THF and NMP are preferred. Furthermore, a solvent containing NMP which is able to enhance also the film-forming properties of the composition is preferable, and a mixed solvent of THF and NMP is the most preferable.

The method for preparing the composition according to the present invention is arbitrary. In the case where the solubilizer (polymer) is liquid, the composition can be prepared by appropriately mixing the solubilizer with CNTs. Where the solubilizer is solid, the composition can be prepared by melting the solubilizer and mixing the molten solubilizer with CNTs.
Besides, in the case of using an organic solvent, the composition may be prepared by mixing the solubilizer, CNTs and the organic solvent in an arbitrary sequence.
In this case, it is preferable to subject the mixture of the solubilizer, the CNTs and the organic solvent to a solubilizing treatment, whereby the proportion of the isolated CNTs dissolved can be further enhanced. Examples of the solubilizing treatment includes wet-type treatments using a ball mill, a bead mill, a jet mill or the like, and ultrasonication conducted using a bath-type or probe-type sonicator. Taking treatment efficiency into consideration, the ultrasonication is preferred.
While the solubilizing treatment time is arbitrary, it is preferably from about five minutes to about 10 hours, and is more preferably from about 30 minutes to about five hours.

Further, it is preferable to conduct a heat treatment prior to the solubilizing treatment. By the heat treatment, the CNT solubilization can be performed efficiently, and in this case, also, the proportion of the isolated CNT dissolved can be further enhanced.
While the heat treatment temperature and time are not particularly limited, it is preferable to conduct the treatment at a temperature around the boiling point of the solvent used and for a time of from one minute to one hour, more preferably from three minutes to 30 minutes.

In the composition according to the present invention, the mixing ratio of the solubilizer to the CNTs is from about 1000:1 to about 1:100 by weight (mass).
Besides, the concentration of the solubilizer in the composition prepared using the organic solvent is not particularly limited insofar as the concentration permits solubilization of the CNTs into the organic solvent. In the present invention, the concentration of the solubilizer in the composition is preferably about 0.001 to 20 wt%, more preferably about 0.005 to 10 wt%.
Further, the concentration of the CNTs in the composition is arbitrary insofar as at least part of the CNTs are isolatedly dissolved (solubilized). In the present invention, the concentration of the CNTs in the composition is about 0.0001 to 10 wt%, more preferably about 0.001 to 5 wt%.
In the composition according to the present invention which is prepared as above-mentioned, the solubilizer is presumed to be adhered to the CNT surfaces to form a composite.

The composition according to the present invention may be mixed with a general-purpose synthetic resin soluble in the above-mentioned various organic solvents, to form a composite material.
Specific examples of the general-purpose synthetic resin include polyolefin resins such as polyethylene (PE), polypropylene (PP), ethylene-vinyl acetate copolymer (EVA), ethylene-ethyl acrylate copolymer (EEA), etc., styrene resins such as polystyrene (PS), high-impact polystyrene (HIPS), acrylonitrile-styrene copolymer (AS), acrylonitrile-butadiene-styrene copolymer (ABS), etc., vinyl chloride resin, polyurethane resin, phenolic resin, epoxy resin, amino resin, and unsaturated polyester resin.
Specific examples of general-purpose synthetic engineering plastics include polyamide resin, polycarbonate resin, polyphenylene ether resin, modified-polyphenylene ether resin, polyester resins such as polyethylene terephthalate (PET), polybutylene terephthalate (PBT), etc., polyacetal resin, polysulfone resin, polyphenylene sulfide resin, and polyimide resin.

The CNT-containing composition (solution) according to the present invention can form a film by being applied to an appropriate substrate of PET, glass, ITO or the like by an appropriate method such as a casting method, a spin coating method, a bar coating method, a roll coating method and a dip coating method.
The thin film obtained in this manner can be favorably used as an electroconductive material for forming an anti-static film, a transparent electrode or the like while making the most of the metallic properties of carbon nanotubes, or as a material for a photoelectric conversion element, an electroluminescence element or the like while making the most of the semiconductor-like properties of the carbon nanotubes.

### EXAMPLES

Now, the present invention will be described more specifically below while showing Examples and Comparative Examples, but the invention is not limited to the following Examples.

### [1] Synthesis of Solubilizer (Triarylamine Hyperbranched Polymer)

### Synthetic Example 1

As a triarylamine hyperbranched polymer, a bromo compound of a polymer having a repeating unit represented by the formula (10) (the compound will hereinafter be described as PTPA-Br) was synthesized by the method described in JP-A H10-306143 wherein a mono-Grignard compound of tris(4-bromophenyl)amine is subjected to polycondensation in the presence of a nickel(II) complex.
The weight average molecular weight Mw of the thus obtained polymer was 5,400. Incidentally, the weight average molecular weight (here and hereafter) is a value measured by gel permeation chromatography and expressed in terms of polystyrene. Measuring Instrument and Conditions of Gel permeation chromatography

| | |
|---|---|
| Instrument: | SCL-10AVP, produced by Shimadzu Corporation |
| Column: | SHODEX KF-804L+KF-805L, produced by Showa Denko K.K. |
| Column Temperature: | 40°C |
| Solvent: | THF |
| Detector: | RI |

### Synthetic Example 2

As a triarylamine hyperbranched polymer, a bromo compound of a polymer having a repeating unit represented by the formula (11) (the compound will hereinafter be described as PTPAP-Br) was synthesized by the method described in JP-A 2002-30136 wherein tris(4-bromophenyl)amine and 1,4-phenyldiboronic acid are subjected to dehalogenation polycondensation in the presence of a palladium(0) complex.
The weight average molecular weight Mw of the thus obtained polymer was 5,200.

### Synthetic Example 3

As a triarylamine hyperbranched polymer, a bromo compound of a polymer having a repeating unit represented by the formula (12) (the compound will hereinafter be described as PTPAPV-Br) was synthesized by the method described in Synthetic Metals, vol. 135 to 136, pp. 57 to 58, 2003 wherein tris(4-bromophenyl)amine and 4-vinylphenylboronic acid are subjected to coupling in the presence of a palladium(0) complex, followed by dehalogenation polycondensation in the presence of a palladium(II) complex.
The weight average molecular weight Mw of the thus obtained polymer was 6,700.

### Synthetic Example 4

As a triarylamine hyperbranched polymer, a bromo compound of a polymer having a repeating unit represented by the formula (13) (the compound will hereinafter be described as PTPAVPV-Br) was synthesized by a method described in the proceedings of the 53rd Symposium on Macromolecules, September 2004 wherein tris(4-bromophenyl)amine and 1,4-divinylbenzene are subjected to dehalogenation polycondensation in the presence of a palladium(II) complex.
The weight average molecular weight Mw of the thus obtained polymer was 7,000.

### [2] Preparation of Carbon Nanotube-containing Composition and Thin Film

### Example 1

To prepare a PTPA-Br/THF solution, 1 mg of PTPA-Br obtained in Synthetic Example 1 was dissolved in 10 mL of THF, and then 0.5 mg of unpurified SWCNT (product name: HiPco, produced by Carbon Nanotechnologies, Inc.) was added to the solution.
The resulting mixture was heated to a temperature (about 66°C) near the boiling point of THF for 10 minutes, and was then subjected to ultrasonication at room temperature for one hour by use of a bath-type ultrasonication device (ultrasonic cleaner, BRANSON 5510). Thereafter, a black transparent SWCNT-containing solution was collected as a supernatant liquid by centrifugation (CF-15R, produced by Hitachi, Ltd.) for one hour (room temperature) under 10,000 g.

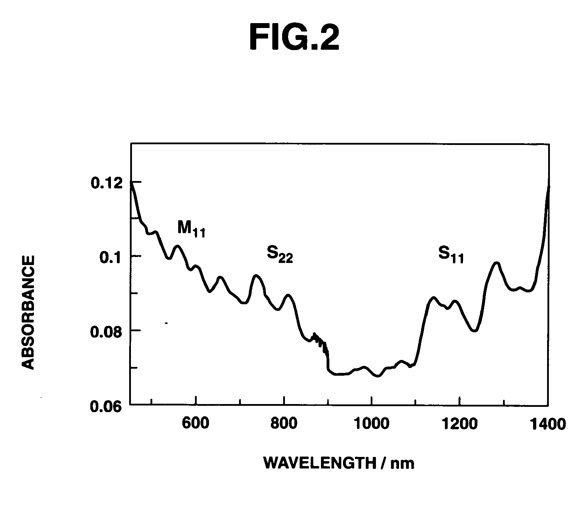

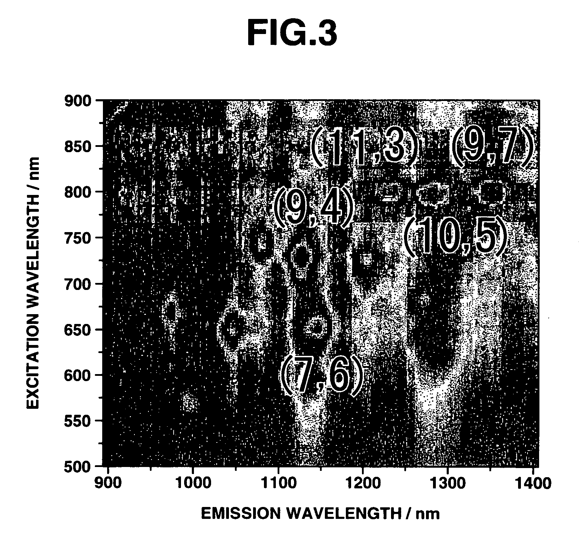

The thus obtained SWCNT-containing solution was served to measurement of ultraviolet-visible-near-infrared absorption spectrum (measuring instrument: V-570, produced by JASCO Corporation), whereon absorption was clearly observed in a semiconductor S₁₁ band (1400 to 1000 nm) and S₂₂ band (1000 to 600 nm) as well as a metallic band (600 to 450 nm), whereby it was confirmed that isolated SWCNTs were dissolved (FIG. 2).
Besides, when the SWCNT-containing solution obtained was served to measurement of near-infrared fluorescence spectrum (measuring instrument: Fluorolog (registered trademark)-3, produced by HORIBA, Ltd.), fluorescent emission corresponding to a chiral index observed only for isolatedly dissolved semiconductor-like CNTs was observed, which also showed that isolated SWCNTs were dissolved (FIG. 3).

The SWCNT-containing solution obtained above was dropped onto a substrate made of polyethylene terephthalate (PET), and was applied by a bar coater with a slit width of 24 µm, whereby a transparent, uniform SWCNT/PTPA-Br thin film composite was obtained.

### Example 2

An experiment was conducted in the same manner as in Example 1, except that PTPAP-Br obtained in Synthetic Example 2 was used in place of PTPA-Br. Upon the experiment, a black transparent SWCNT-containing solution with isolated SWCNTs dissolved therein was obtained. Besides, the solution was dropped onto a PET substrate and applied by a bar coater with a slit width of 24 µm in the same manner as in Example 1, whereby a transparent, uniform SWCNT/PTPAP-Br thin film composite was obtained.
When the SWCNT-containing solution prepared by use of PTPAP-Br as above was served to measurement of ultraviolet-visible-near-infrared absorption spectrum, the intensity of the absorption observed for isolatedly dissolved SWCNTs was higher than in the case of using PTPA-Br, whereby it was confirmed that isolated SWCNTs were dissolved in an amount larger than that in the case of PTPA-Br.

### Example 3

An experiment was carried out in the same manner as in Example 1, except that PTPAVPV-Br obtained in Synthetic Example 4 was used in place of PTPA-Br. Upon the experiment, a blackish (lighter in black color than the solution of Example 1) transparent SWCNT-containing solution with isolated SWCNTs dissolved therein was obtained. In addition, the solution was dropped onto a PET substrate and applied by a bar coater with a slit width of 24 µm in the same manner as in Example 1, whereby a transparent, uniform SWCNT/PTPAVPV-Br thin film composite was obtained.

### Example 4

By dissolving 1 mg of a triarylamine hyperbranched polymer PTPA-Br in 5 mL of a mixed solvent which was prepared by mixing THF with NMP in a volume ratio of 1:1 and which was used in place of THF (the mixed solvent will hereinafter be described as THF/NMP), a PTPA-Br/THF/NMP solution was prepared, and 1 mg of the above-mentioned unpurified SWCNTs was added thereto. Thereafter, an experiment was performed in the same manner as in Example 1, whereon a black transparent SWCNT-containing solution with isolated SWCNTs dissolved therein was obtained. Besides, the solution was dropped onto a PET substrate and applied by a bar coater with a slit width of 24 µm in the same manner as in Example 1, whereby a transparent, uniform SWCNT/PTPA-Br thin film composite was obtained.

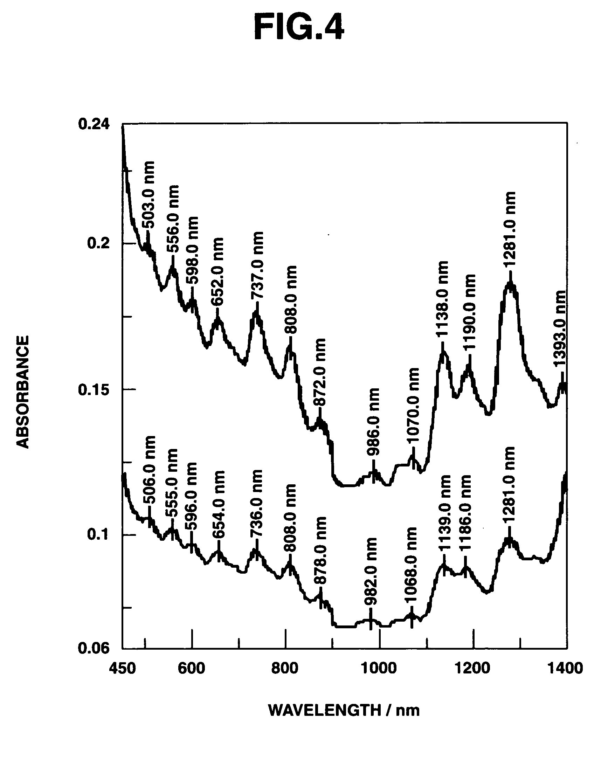

When the SWCNT-containing solution prepared by use of THF/NMP as above was served to measurement of ultraviolet-visible-near-infrared absorption spectrum, the intensity of the absorption observed for isolatedly dissolved SWCNTs was higher than in the case of using THF alone, whereby it was confirmed that isolated SWCNTs were dissolved in an amount larger than that in the case of THF (FIG. 4).

### Example 5

As a triarylamine hyperbranched polymer, 1 mg of PTPAP-Br was dissolved in 5 mL of THF/NMP to prepare a PTPAP-Br/THF/NMP solution, to which was added 1 mg of the above-mentioned unpurified SWCNTs. Thereafter, an experiment was carried out in the same manner as in Example 1, whereby a black transparent SWCNT-containing solution with isolated SWCNTs dissolved therein was obtained.
In addition, the solution was dropped onto a PET substrate and applied by a bar coater with a slit width of 24 µm in the same manner as in Example 1, whereby a transparent, uniform SWCNT/PTPAP-Br thin film composite was obtained.

### Example 6

As a triarylamine hyperbranched polymer, 1 mg of PTPAVPV-Br was dissolved in 5 mL of THF/NMP to prepare a PTPAVPV-Br/THF/NMP solution, to which was added 1 mg of the above-mentioned unpurified SWCNTs. Thereafter, an experiment was performed in the same manner as in Example 1, whereon a blackish (lighter in black color than the solution of Example 1) transparent SWCNT-containing solution with isolated SWCNTs dissolved therein was obtained.
Besides, the solution was dropped onto a PET substrate and applied by a bar coater with a slit width of 24 µm in the same manner as in Example 1, whereby a transparent, uniform SWCNT/PTPAVPV-Br thin film composite was obtained.

### Example 7

A triarylamine hyperbranched polymer PTPA-Br in an amount of 1 mg was dissolved in 5 mL of THF/NMP to prepare a PTPA-Br/THF/NMP solution, to which was added 1 mg of unpurified MWCNTs (product name: L MWNTs-2040, produced by Shenzhen Nanotech Port Co., Ltd.). Thereafter, an experiment was conducted in the same manner as in Example 1, whereon a black transparent MWCNT-containing solution with isolated MWCNT dissolved therein was obtained.
In addition, the solution was dropped onto a PET substrate and applied by a bar coater with a slit width of 24 µm in the same manner as in Example 1, whereby a transparent, uniform MWCNT/PTPA-Br thin film composite was obtained.

### Comparative Example 1

SWCNTs were subjected to ultrasonication in THF in the same manner as in Example 1, except that no triarylamine hyperbranched polymer was used. Solubilization of the SWCNTs was not achieved.

### Comparative Example 2

In place of the triarylamine hyperbranched polymer, 1 mg of tris(4-bromophenyl)amine which is a monomer was dissolved in 10 mL of THF to prepare a solution, to which was added 1 mg of unpurified SWCNTs. Thereafter, an experiment was performed in the same manner as in Example 1, whereby an SWCNT-containing solution could not obtained.

## Claims

1. A carbon nanotube solubilizer comprising a hyperbranched polymer containing a triarylamine structure as a repeating unit and having a weight average molecular weight of 750 to 4,000,000.

2. The carbon nanotube solubilizer according to claim 1, wherein said triarylamine structure is represented by the formula (1): 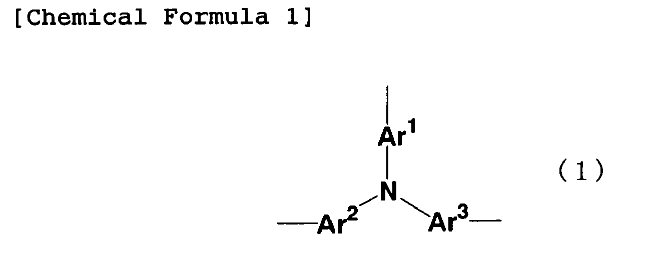 where Ar¹, Ar² and Ar³ are each independently a bivalent organic group selected from among the formulae (2) to (9): 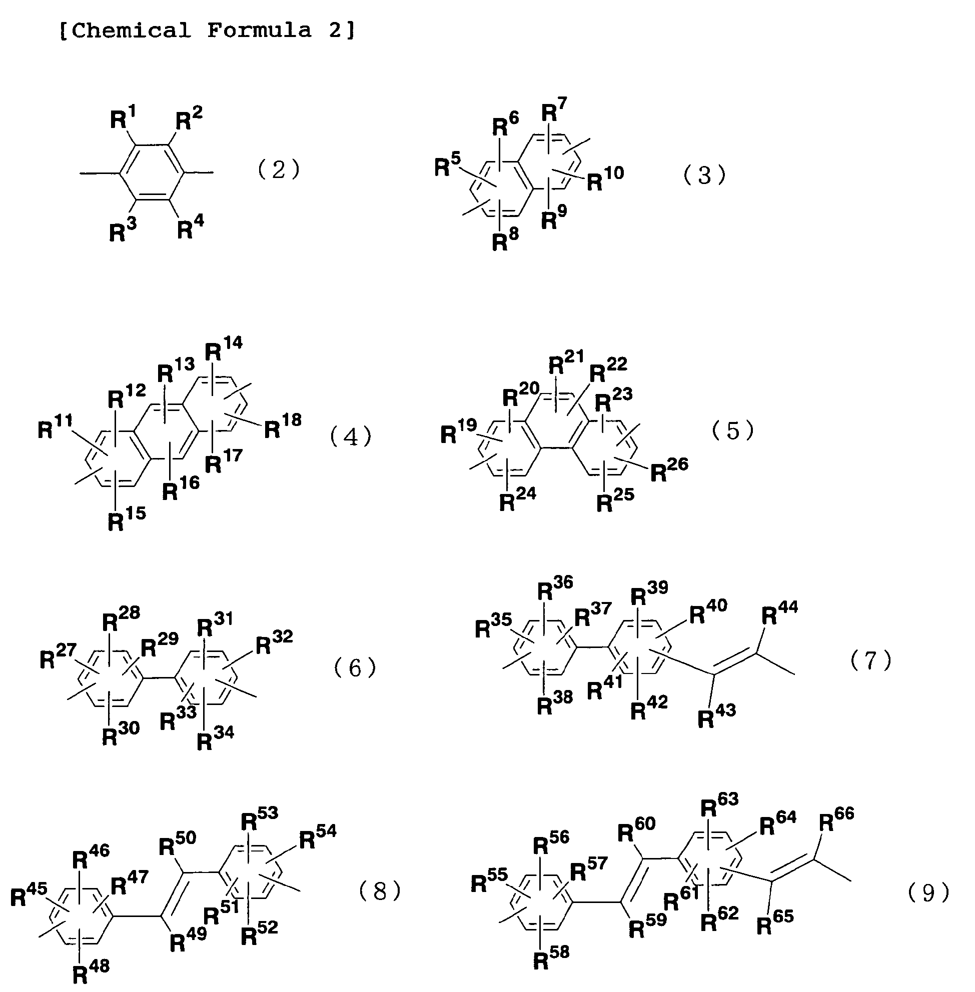 where R¹ to R⁶⁶ are each independently a hydrogen atom, a halogen atom, an alkyl group of 1 to 5 carbon atoms which may have a branched structure, or an alkoxyl group of 1 to 5 carbon atoms which may have a branched structure.

3. The carbon nanotube solubilizer according to claim 2, wherein Ar¹, Ar² and Ar³ are each independently a bivalent organic group selected from among the above-mentioned formulae (2) to (6).

4. The carbon nanotube solubilizer according to claim 2, wherein said triarylamine structure is represented by the formula (10):

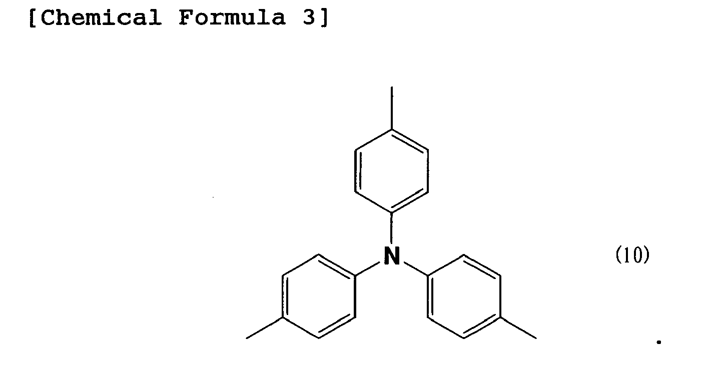

5. The carbon nanotube solubilizer according to claim 2, wherein said triarylamine structure is represented by the formula (11):

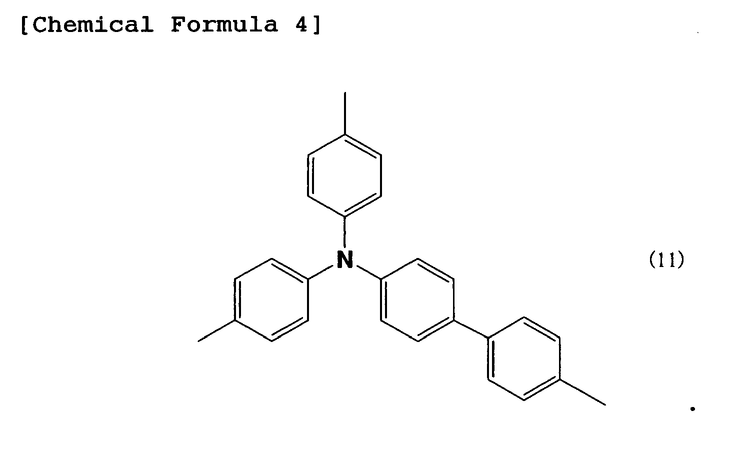

6. The carbon nanotube solubilizer according to claim 2, wherein said triarylamine structure is represented by the formula (12):

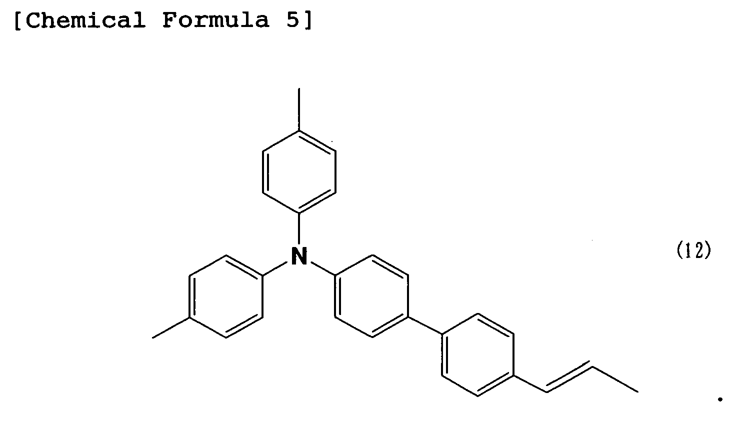

7. The carbon nanotube solubilizer according to claim 2, wherein said triarylamine structure is represented by the formula (13):

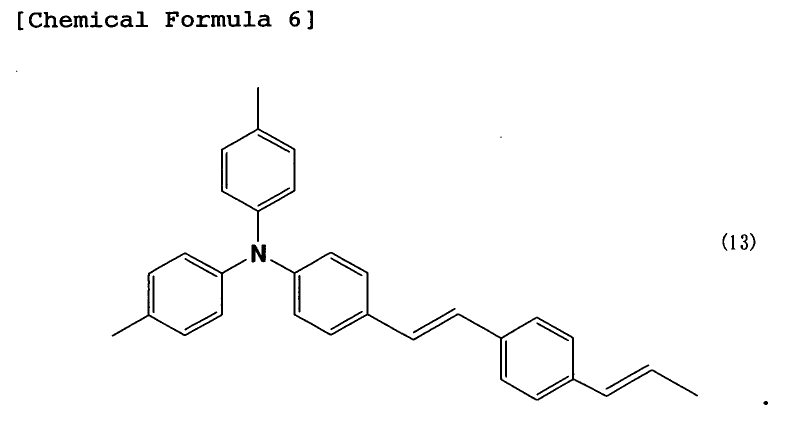

8. A composition containing a carbon nanotube solubilizer according to any one of claims 1 to 7, and carbon nanotubes.

9. The composition according to claim 8, wherein said carbon nanotube solubilizer is adhered to surfaces of said carbon nanotubes to form a composite.

10. The composition according to claim 8 or 9, further containing an organic solvent.

11. The composition according to claim 10, wherein said carbon nanotubes are dissolved in said organic solvent.

12. The composition according to claim 10, wherein said composite is dissolved in said organic solvent.

13. The composition according to any one of claims 8 to 12, wherein said carbon nanotube is at least one selected from the group composed of a single-walled carbon nanotube, a double-walled carbon nanotube and a multi-walled carbon nanotube.

14. A thin film obtained from a composition according to any one of claims 8 to 13.

15. A method of preparing a composition, comprising the steps of mixing a carbon nanotube solubilizer according to any one of claims 1 to 7, carbon nanotubes, and an organic solvent to prepare a mixture, and subjecting said mixture to ultrasonication.

16. The method of preparing the composition according to claim 15, comprising the steps of adding carbon nanotubes to a solution containing said carbon nanotube solubilizer dissolved in said organic solvent to prepare said mixture, and subjecting said mixture to ultrasonication.

17. The method of preparing the composition according to claim 15 or 16, wherein said mixture is subjected to a heat treatment and thereafter to said ultrasonication.
